Europäisches Patentamt

European Patent Office

Office européen des brevets

(19)

(11) EP 0 790 223 A1

(12) **EUROPÄISCHE PATENTANMELDUNG**

(43) Veröffentlichungstag:
20.08.1997 Patentblatt 1997/34

(51) Int. Cl.⁶: $C04B\ 35/80$, $C22C\ 1/05$,
$C04B\ 35/65$, $C04B\ 35/653$

(21) Anmeldenummer: 97102335.3

(22) Anmeldetag: 13.02.1997

(84) Benannte Vertragsstaaten:
DE FR GB IT SE

(30) Priorität: 16.02.1996 DE 19605858

(71) Anmelder: CLAUSSEN, Nils
D-21224 Rosengarten (DE)

(72) Erfinder:
• Claussen, Nils
21224 Rosengarten (DE)

• Wagner, Florian
20535 Hamburg (DE)

(74) Vertreter: Huber, Bernhard, Dipl.-Chem. et al
Patentanwälte
H. Weickmann, Dr. K. Fincke
F.A. Weickmann, B. Huber
Dr. H. Liska, Dr. J. Prechtel, Dr. B. Böhm,
Kopernikusstrasse 9
81679 München (DE)

(54) **Verfahren zur Herstellung von Alumina-Aluminid-Composites, deren Ausführung und Verwendung**

(57) Die Erfindung betrifft ein Verfahren zur Herstellung eines metall-keramischen Verbundwerkstoff-Formkörpers, enthaltend eine $Al_2O_3$-reiche Phase, die von einer überwiegend aus Aluminiden bestehenden metallischen Phase durchzogen ist, wobei man einen, gegebenenfalls gesinterten, Vorkörper aus mindestens einer von Aluminium reduzierbaren oxidischen Verbindung, und gegebenenfalls weiteren nicht oxidischen Verbindungen oder Elementen, mit flüssigem Aluminium oder Aluminiumlegierung umsetzt, bis mindestens in der Oberschicht die Bildung von Aluminid und $Al_2O_3$ stattgefunden hat. Der auf diese Weise hergestellte Verbundwerkstoff-Formkörper kann als verschleißfeste oder/und hochtemperaturfeste Komponente im Maschinen-, Apparate-, Motoren- und Turbinenbau, für den Einsatz unter Korrosions- oder/und Oxidationsbedingungen, als Funktionselement, insbesondere als Hochleistungsbremselement und als elektrisches oder magnetisches Funktionselement dienen.

**Beschreibung**

Reaktionsformen keramischer oder metallkeramischer Körper sowie von Oberflächen funktioneller Teile bzw. von Konstruktionselementen sowie von Matrices faser- oder mit anderen Elementen verstärkter Verbundwerkstoffe gehört zu den besonders einfachen und wirtschaftlichen Herstellungsverfahren innerhalb der Werkstofftechnologie. Das Prinzip beruht auf der Erzeugung von hochwertigen (high-value added) Werkstoffen über eine Reaktion zweier oder mehrerer meist billiger Rohstoffe bei Temperaturen, die in sehr vielen Fällen unterhalb der üblichen (reaktionsfreien) Herstellungstemperaturen liegen. Typische Merkmale von Reaktionsformverfahren sind: kostengünstig (low cost), endkonturnah (near net shape) und rein (high purity).

Neue Verstärkungskonzepte für keramische Werkstoffe beruhen auf dem Einbau einer zweiten Phase in die keramische Matrix, so daß die positiven Eigenschaften der Keramik im wesentlichen erhalten bleiben. Beispiele dafür sind umwandlungsfähige $ZrO_2$-Teilchen ("Strengthening Strategies for $ZrO_2$-Toughened Ceramics at High Temperatures", J. Mat. Sci. Eng., 71 (1985) 23) oder SiC-Whisker ("TZP Reinforced with SiC Whiskers", J.Am.Ceram. Soc., 69 (1986) 288) in einer $Al_2O_3$-Matrix. Den Einbau von Metallen hielt man zunächst nicht für sinnvoll, da nach herkömmlichen Verbundwerkstofftheorien Metalle mit niedriger Fließgrenze und geringem Elastizitätsmodul harte und steife Keramiken besonders hinsichtlich ihrer Festigkeit nicht verbessern könnten. Zwar konnte kürzlich gezeigt werden, daß dies nicht immer zutrifft ("Effect of Microstructure on Thermal Shock Resistance of Metal-Reinforced Ceramics", J. Am. Ceram. Soc. 77 (1994) 701 und "Metalle verbessern mechanische Eigenschaften von Keramiken", Spektrum der Wissenschaft, Januar (1993) 107). Allerdings ist die erzielte Verstärkung nur möglich, wenn der Gefügeaufbau der klassischen Cermets auf den Kopf gestellt wird, d.h. die Keramik eine feste Matrix bildet, in die eine durchdringende einkristalline metallische Phase eingebettet ist. In diesem Fall wäre mit der Bezeichnung "Metcers" die Vertauschung der Gefügebausteine auch begrifflich charakterisiert. Außer dem veränderten Gefügeaufbau dieser Verbundwerkstoffe ist aber auch die erheblich kleinere Dimension der Metallphase für die Verbesserung gegenüber den klassischen Cermets verantwortlich. Das in der keramischen Matrix eingebettete Metall weist wesentlich bessere mechanische Eigenschaften auf als im 'freien' Zustand, was sogar für sonst spröde intermetallische Phasen zuzutreffen scheint ("Metcers - a Strong Variant of Cermets", Cfi/Ber. DKG 71 (1994) 301).

Zur Herstellung dieser neuartigen Metall-Keramik-Verbundwerkstoffe sind bislang verschiedene Methoden zur Anwendung gelangt, wie zum Beispiel die gerichtete Schmelzoxidation (DMO), bei der ein $Al/Al_2O_3$-Verbundwerkstoff auf einer Al-Schmelze durch Oxidation an Luft aufwächst (siehe z.B. "Formation of Lanxide™ Ceramic Composite Materials", J. Mat. Res., 1 (1986) 81 und "Directed Oxidation of Molten Metals", in: Encyclopedia of Mat. and Eng. (Ed.R.W.Cahn), Supplementary Vol. 2, Pergamon, Oxford (1990) 1111). Andere praktikable Verfahren sind das Druckgießen ("Application of the Infiltration Technique to the Manufacture of Cermets", Ber. Dt. Keram. Ges., 48 (1971) 262-8) und die Infiltration poröser keramischer Vorformen mit aufgeschmolzenem Metall ("Method for Processing Metal-Reinforced Ceramic Composites", J. Am. Ceram. Soc., 73 [2] 388-393 (1990). Die Gasdruckinfiltration bietet die Möglichkeit, auch nicht benetzende Metalle in die keramische Vorform zu infiltrieren (siehe z.B. "Microstructure and Properties of Metal Infiltrated RBSN Composites" J. Eur. Ceram. Soc. 9 (199161-65). Dabei wird zunächst das Metall unter Vakuum aufgeschmolzen und nach Erreichen der Infiltrationstemperatur, die meist 100 bis 200°C über der Schmelztemperatur liegt, die Keramik in die Schmelze getaucht und ein Gasdruck aufgebaut. Dieses Verfahren eignet sich auch für hochschmelzende Metalle, die durch herkömmliches Druckgießen nicht infiltrierbar wären, ist jedoch sehr aufwendig.

Ein weiteres Verfahren, bei dem ein Al-durchzogener $Al_2O_3$-Körper entsteht, basiert auf der Reaktionsinfiltrierung (Reactive Metal Infiltration) $SiO_2$-haltiger keramischer Vorkörper (siehe z.B. "$Al_2O_3$/Al Co-Contiuous Ceramic Composite ($C^4$) Materials Produced by Solid/Liquid Displacement Reactions: Processing, Kinetics and Microstructures", Ceram. Eng. Sci. Proc. 15 (1994) 104).

Al- und $Al_2O_3$-haltige Verbundkörper lassen sich außerdem durch Thermitreaktionen (SHS: Self-Propagating High-Temperature Synthesis) herstellen. Es wurden bisher eine Vielzahl derartiger Reaktionen untersucht, die alle nach dem Schema:

$$MO + Al \rightarrow Al_2O_3 + M$$

ablaufen, wobei M ein Metall und MO das entsprechende Oxid ist (siehe z.B. "Combustion Synthesis of Ceramic and Metal-Matrix Composites", J. Mat. Synth. Proc. 2 (1994) 71 und "Thermodynamic Analysis of Thermite-Based Reaction for Synthesis of Oxide-$B_4C$ Composites", J. Mat. Synth. Proc., 2 (1944) 217 und 227). Alle SHS-Verbundwerkstoffe sind aufgrund unkontrollierbarer Hitzeentwicklung (infolge der großen Exothermie der Reaktion) porös, inhomogen und von einer groben Gefügestruktur. Ihre Festigkeit liegt daher selten über 100 MPa, so daß eine Anwendung als Konstruktionselement nicht in Frage kommt.

Es ist seit langem das Ziel der Werkstofforschung, auf vielen Gebieten Metalle durch intermetallische Verbindungen auch in Metall-Keramik-Verbundwerkstoffen zu ersetzen. Besonders die intermetallischen Verbindungen des Al(Aluminide) sind hier u.a. aufgrund ihres geringen spezifischen Gewichts, ihrer guten Hochtemperaturfestigkeit und ihrer Oxidationsbeständigkeit gefragt (siehe z.B. "Intermetallic Compounds", Mat. Res. Soc. Proc. Vol. 288, 1993). Die pulvermetallurgische Herstellung von Aluminiden mit keramischen Phasen ist bisher jedoch außergewöhnlich aufwendig, da einerseits die Aluminidpulverherstellung aufgrund extrem inerter Bedingungen sehr teuer ist und andererseits eine völlige Verdichtung nur durch Heißpressen, Heißschmieden, Heißextrudieren oder Heißisostatpressen oder Explosivformen möglich ist (siehe u.a. "Powder Processing of Intermetallics and Intermetallic Matrix Composites (IMC)" p: 93-124 in Processing and Fabrication of Advanced Materials for High-Temperature Applications-II, ed. V.A. Ravi etal, The Min. Met. Mat. Soc., 1993). Außerdem stellt in allen Fällen das Aluminid die Matrix dar, während $Al_2O_3$ als disperse Phase mit einem Volumenanteil unter 50% dispergiert ist (siehe z.B. "A Review of Recent Developments in $Fe_3Al$-Based Alloys", J. Mat. Res. 6 (1991) 1779 and "Powder Processing of High Temperature Aluminide-Matrix Composites", H-T Ordered Intermetallic Alloys III, 133 (1988) 403). Bei der Herstellung solcher Verbundwerkstoffe besteht zwar die Möglichkeit, Reaktionswärmen auszunutzen, indem man zwei oder mehrere Metalle miteinander zum gewünschten Aluminid reagieren läßt, aber in allen bisher untersuchten Fällen kommt es auch hierbei zu groben und inhomogenen Gefügeausbildungen, so daß mechanische Eigenschaften entweder gar nicht gemessen wurden ("Reactive Sintering Nickel-Aluminide to Near Full Density", PMI 20 (1988) 25) oder aber die vorgeformten Körper in einem weiteren Schritt heißnachverdichtet werden müssen ("SHS of TiAl-SiC and TiAl-$Al_2O_3$ Intermetallics Composites", J.Mater. Sci. Let., 9 (1990) 432).

Alle bisher bekannten Verbundwerkstofftypen und ihre Herstellungsverfahren haben charakteristische Nachteile. Das Druckgußverfahren ist beispielsweise aus technischen Gründen (kein geeignetes Druckbehältermaterial vorhanden) nur für Al-Legierungen, nicht aber für hochschmelzende Aluminide geeignet. Ähnliches gilt für die Gasdruckinfiltration, bei der Aluminide nur bei Temperaturen weit über 1400°C infiltriert werden könnten. Außerdem müßte hier der infiltrierte Verbundkörper aus der erstarrten Aluminidschmelze noch herausgearbeitet werden, was nur mit großem Aufwand und nur für einfache Geometrien möglich ist. Die Reaktionsformverfahren DMO und $C^4$ sind nur für $Al_2O_3$-Körper mit Si- oder Mg-haltigen Al-Legierungen, d.h. nicht für aluminidhaltige Legierungen anwendbar. Außerdem sind die Reaktionsgeschwindigkeiten mit durchschnittlich 2 cm/Tag extrem langsam, womit die Prozeßdauer übermäßig lang wird. Alle pulvermetallurgischen Verfahren haben bisher zu den für oxidkeramische Cermets typischen Nachteilen geführt, d.h. die Gefüge sind ohne heiße Nachverdichtung porös, grob (meist sind die Gefügebestandteile weit größer als 10 $\mu$m) und inhomogen, so daß man eine unzureichende Festigkeit und Bruchzähigkeit erhält.

Gemäß einem älteren Vorschlag, der eine Reihe der vorgenannten Nachteile ausräumt, wird aus einer intensiv gemischten und gemahlenen Pulvermischung aus Al sowie Oxiden und gegebenenfalls weiteren Zusätzen ein Grünkörper geformt, der in einer Wärmebehandlung in inerter Atmosphäre in einen $Al_2O_3$- und Aluminid-haltigen Verbundwerkstoff umgewandelt, d.h. reaktionsgeformt (3A-Verfahren) wird. Dieses Verfahren hat folgende Nachteile: a) Die Wärmebehandlung muß bei Temperaturen > 1400°C durchgeführt werden, b) die Reaktion und Verdichtung ist mit einer Schrumpfung zwischen 10 und 20 % verbunden, was u.a. die Anwendung auf Verbundwerkstoffe erschwert, c) die intensive Mahlung muß in organischen Lösungsmitteln erfolgen, was das Verfahren wenig umweltfreundlich und aufwendig macht, d) der feine Al-Pulveranteil führt zur leichten Entzündbarkeit der Mischung, so daß aufwendige Sicherheitsmaßnahmen erforderlich sind, e) der während des Mahlens oxidierte Al-Anteil (notwendig aus Sicherheitsgründen) läßt sich nur ungenau einstellen, f) das Verfahren eignet sich mehr zur Herstellung von Massivkörpern und nicht so sehr für Schichten.

Aufgabe der vorliegenden Erfindung ist es daher, die Nachteile des oben erwähnten älteren Vorschlags zu vermeiden, ohne eine Verschlechterung der hergestellten Produkte in Kauf nehmen zu müssen.

Diese Aufgabe wird erfindungsgemäß gelöst durch ein Verfahren zur Herstellung eines metallkeramischen Verbundwerkstoff-Formkörpers mit Gehalt an einer $Al_2O_3$-reichen Phase, die von einer überwiegend aus Aluminiden bestehenden metallischen Phase durchzogen ist, welches dadurch gekennzeichnet ist, daß man einen, gegebenenfalls gesinterten, Vorkörper aus mindestens einer von Aluminium reduzierbaren oxidischen Verbindung, und gegebenenfalls weiteren nicht-oxidischen Verbindungen oder Elementen, mit flüssigem Aluminium oder Aluminiumlegierung umsetzt, bis mindestens in der Oberschicht die Bildung von Aluminid und $Al_2O_3$ stattgefunden hat.

Der Vorkörper kann ein ungesinterter Grünkörper oder ein aus letzterem durch Sintern (bzw. Plasmaspritzen) hergestellter Precursor sein.

Erfindungsgemäß wird daher ein oxidhaltiger Vorkörper, der als Formkörper, Schicht, Zwischenschicht oder Matrix eines Verbundwerkstoffs ausgebildet sein und in grünem Zustand oder vorgesintert vorliegen kann, mit flüssigem Al oder einer Al-Legierung so zur Umsetzung gebracht, daß man einen $Al_2O_3$ und Aluminid enthaltenden Werkstoff erhält, der im folgenden als i-3A bezeichnet wird (für infiltrated alumina-aluminide alloys). Die hierbei ablaufende Reaktion läßt sich beispielsweise durch die Gleichung

$$3TiO_2 + 7Al \rightarrow 2Al_2O_3 + 3TiAl$$

veranschaulichen für den Fall eines Vorkörpers, der als von Aluminium reduzierbare oxidische Verbindung $TiO_2$ enthält. Neben diesem Oxid enthält der Vorkörper zweckmäßig noch $Al_2O_3$, vorzugsweise in einer Menge von 20 bis 50 Vol.-%, bezogen auf den dichten Körper. Vorzugsweise wird von einem Vorkörper ausgegangen, der $Al_2O_3$ in solcher

Menge enthält, daß eine $Al_2O_3$-Phase vorliegt, die ein zusammenhängendes stützendes Gerüst bildet.

Die $Al_2O_3$-Phase weist vorzugsweise $Al_2O_3$ mit Korngrößen zwischen 0,1 und 10 $\mu$m im Mittel auf. Die metallische Phase enthält eines oder mehrere der folgenden Aluminide: $TiAl$, $TiAl_3$, $Ti_3Al$, $Ni_3Al$, $NiAl$, $Fe_3Al$, $FeAl$, $Zr_3Al$, $Ni_2TiAl$, $Fe_3(Al,Si)$, $NbAl_3$, $Nb_3Al$, $TaAl_3$, $Ta_3Al$, $FeCrAl$, $Fe_3AlC$, $Co_2TiAl$, $FeTiAl$, $Ti_2NbAl$, $Ti_5(Al,Si)_3$. Zusätzlich kann die metallische Phase Al enthalten. Außerdem kann sie eines oder mehrere der Elemente aus der Gruppe Au, Ag, B, Ce, Cu, Ca, Cr, Co, Fe, Ge, Hf, K, U, Mo, Mg, Mn, Ni, Ta, Ti, Zn, Zr, Si, Sb, Sn, Y, Sc, W, V enthalten. Falls solche Elemente vorhanden sind, kann ihr Anteil bis zu 20 Vol.-% betragen.

Beispiele für oxidische Verbindungen, die von Aluminium reduzierbar sind und im Vorkörper eingesetzt werden können sind $CaO$, $Cr_2O_3$, $CuO$, $Cu_2O$, $CoO$, $Co_2O_3$, $FeO$, $Fe_2O_3$, $Fe_3O_4$, $HfO_2$, $Li_2O$, $MnO$, $MgO$, $MoO_3$, $Na_2O$, $Nb_2O$, $Nb_2O_5$, $NiO$, $SiO_2$, $TiO$, $TiO_2$, $V_2O_5$, $WO_3$, $Y_2O_3$, $ZrO_2$, Mullite, Spinelle, Zirkonate, Titanate sowie Fe-, Ti-, Co-, Ni-, Zr-, Si-, Nb-haltige Erze, insbesondere Zirkon ($ZrSiO_4$) oder Ilmenit ($FeTiO_3$).

Der Vorkörper wird nach bekannten pulvermetallurgischen Verfahren, wie Pressen, Spritzen oder Schlickergießen und dergleichen aus den feingemahlenen Bestandteilen hergestellt. Vorzugsweise werden hierzu Pulver mit einer mittleren Teilchengröße zwischen 0,1 und 100 $\mu$m, besonders bevorzugt zwischen 0,3 und 10 $\mu$m verwendet. Außer den essentiellen Bestandteilen, also mindestens einem von Aluminium reduzierbaren Oxid und $Al_2O_3$ können dem zur Herstellung des Vorkörpers verwendeten Pulvergemisch zusätzliche keramische oder/und metallische Phasen zugesetzt werden.

Der Pulvermischung können gegebenenfalls Verstärkungs- oder Funktionselemente zugesetzt werden. Diese liegen zweckmäßig in Form von Partikel, Kugeln, Plättchen, Whiskern, Fasern o.dgl. vor. Der Volumenanteil solcher Verstärkungszusätze kann zweckmäßig zwischen 5 und 50 % liegen. Bei größeren oder kleineren Zusätzen lassen sich die Eigenschaften des Grundkörpers nicht mehr im selben Maße erzielen, bzw. wird der angestrebte Verstärkungseffekt gering. Diese Verstärkungs- oder Funktionselemente weisen zweckmäßig Durchmesser zwischen 0,5 und 1000 $\mu$m auf. Hierbei werden die vorzüglichen mechanischen Eigenschaften des Grundkörpers aufrechterhalten. Die zugesetzten Elemente bestehen zweckmäßig aus Oxiden, Carbiden, Nitriden, Boriden und/oder Siliciden, bevorzugt bestehen sie aus Kohlenstoff, Diamant, $SiC$, $Al_2O_3$, $Si_3N_4$, $TiC$, $WC$ oder bzw. und $ZrO_2$. $ZrO_2$ hat sich besonders günstig für die Gefüge-entwicklung erwiesen.

Der Vorkörper kann ein Grünkörper sein oder ein vorgesinterter bzw. plasmagespritzter Precursor.

Vorzugsweise wird die Pulvermischung so zusammengesetzt, daß die $Al_2O_3$-Phase im vorgesinterten oder/und plasmagespritzten Precursor ein zusammenhängendes Netzwerk bildet. Außerdem kann die $Al_2O_3$-Phase durch entsprechende Verstärkungselemente gebildet werden, die insbesondere aus Platelets oder kontinuierlichen oder diskontinuierlichen Fasern mit Durchmessern zwischen 5 und 150 $\mu$m bestehen können. Falls hierbei die Fasern in kontinuierlicher Form vorliegen, werden sie vorzugsweise in Form eines Fasergeleges (Prepreg) eingesetzt.

Gemäß einer speziellen Ausführungsform wird dabei ein vorgeformtes Fasergelege wie oben definiert mit der Vorläufer-Pulversuspension infiltriert. Andere geeignete Verstärkungselemente bestehen aus beschichteten oder unbeschichteten Fasern, wie $SiC$, $SiCB$, $SiCBN$, $Si_3N_4$ oder Mullit. Es ist auch möglich, eine zusammenhängende $Al_2O_3$-Phase nur an der Oberfläche des Grünkörpers vorzugeben, z.B. in Form eines $Al_2O_3$-Behälters, der den $Al_2O_3$-freien Grünkörper umschließt.

Den zur Herstellung des Grünkörpers bzw. des Precursors verwendeten Pulvergemischen können weiterhin nicht oxidische Verbindungen oder Elemente zugesetzt werden, die mit flüssigem Aluminium zu Aluminiden reagieren.

Die Herstellung des Grünkörpers, aus dem gegebenenfalls der Precursor hergestellt wird, erfolgt nach an sich bekannten pulvermetallurgischen Methoden. Geeignet sind alle sogenannten P/M-Verfahren, also einachsiges oder isostatisches Pressen, Spritzgießen, Schlickergießen, Extrudieren oder dergleichen. Diese Methoden sind dem Fachmann bekannt und bedürfen hier keiner näheren Erläuterung. Bei Anwendung dieser Herstellung des Grünkörpers für eine spätere Sinterbehandlung unter Bildung des Precursors kann durch die entsprechende Einstellung der Herstellungsmethode die Porosität des Grünkörpers in gewünschter Weise eingestellt werden. Gemäß einer bevorzugten Ausführungsform der Erfindung erfolgt daher die Formung des Grünkörpers so, daß er auch nach einem anschließenden Sintern mit überwiegend offener Porosität vorliegt. Typischerweise läßt sich bei Herstellung des Grünkörpers durch isostatisches Pressen, z.B. bei Drücken zwischen 50 und 900 MPa die Gründichte zwischen 49 % TD (50 MPa) und 62 % (900 MPa) variieren.

Die offene Porosität soll zweckmäßig 5 bis 60 % ausmachen, vorzugsweise 10 bis 40 %.

Der Grünkörper bzw. Precursor kann aber auch schichtförmig auf einem Grundkörper aufgebaut werden, beispielsweise durch Tauchen in eine Pulversuspension (dip-coating), Aufsprühen der Suspension oder Auftragspritzen, wie thermisches oder Plasmaspritzen. In diesem Falle stellt man die Pulversuspension aus den gemahlenen Ausgangsmaterialien für die Herstellung des Grünkörpers durch Suspendieren in einem wäßrigen oder organischen Lösungsmittel her. Bei dieser Ausführungsform kann die Schicht aus mehreren Einzelschichten aufgebaut werden (gradiert werden), wobei die einzelnen Schichten sowohl Material des Grünkörpers bzw. Precursors als oberste Schicht als auch Material des Grundkörpers enthält. Hierbei nimmt der Volumenanteil des Grundkörpermaterials mit zunehmender Schichtung in Richtung Grundkörper kontinuierlich oder diskontinuierlich zu. Bei dieser Art der Schichtenherstellung wird zweckmäßig die für den Vorläufer bestimmte Pulvermischung trocken, in Wasser oder in einer organischen Flüssigkeit gemahlen unter Bildung der erwähnten Suspension. Geeignet sind hierfür insbesondere Kugelmühlen.

Bei dieser Ausführungsform der Erfindung wird das Vorläuferpulver auf einem beliebigen Grundkörper aus anorganischem Material zweckmäßig in Schichten zwischen 10 µm und 1 cm aufgetragen. Die so hergestellten Grünkörperschichten können dann wie oben beschrieben gesintert werden. Das Sintern selbst erfolgt zweckmäßig in sauerstoffhaltiger Atmosphäre, insbesondere in Luft bei Temperaturen zwischen 1000 und 1400°C.

In der oben beschriebenen Weise erhält man den gesinterten Vorkörper (Precursor) in poröser Form. Für die Erfindung geeignet sind jedoch auch dicht gesinterte Vorkörper. Solche kann man z.B. durch Sintern bei Temperaturen über 1400°C bis 1700°C erhalten.

Der wie beschrieben hergestellte Grünkörper oder Precursor wird dann so lange mit flüssigem Al oder einer flüssigen Al-Legierung in Berührung gebracht, bis er entweder vollständig oder nur im Oberflächenbereich zumindest teilweise in Al₂O₃ und Aluminide umgewandelt ist. Geeignete Temperaturen liegen zwischen 660 und 1300°C, vorzugsweise zwischen 750 und 1100°C. Die Behandlung kann durch Eintauchen des Grünkörpers oder Precursors in das flüssige Aluminium erfolgen oder durch Aufbringen des flüssigen oder flüssig gemachten Aluminiums auf die Oberflächen. Die Behandlung mit dem flüssigen Aluminium (worunter im folgenden auch Aluminiumlegierung verstanden wird) kann unter Vakuum, unter Normaldruck an Luft oder in inerter Atmosphäre wie beispielsweise in N₂ oder Ar, in reduzierender Atmosphäre wie in Formiergas, H₂ oder dergleichen oder unter Überdruck aufgebracht werden. Insbesondere kann mit dem flüssigen Aluminium unter Gasdruck oder in einer Druckgußvorrichtung (Squeeze-Casting) gearbeitet werden.

Wird die Herstellung eines vollständig umgewandelten Körpers angestrebt so wird die Behandlung mit dem flüssigen Aluminium zweckmäßig so durchgeführt, daß dieses in den Porenraum des Vorkörpers eindringen und dort reagieren kann. Alternativ kann das Aluminium auch in Form einer Pulversuspension auf den Vorkörper aufgesprüht oder der Vorkörper in eine Aluminiumpulversuspension eingetaucht werden und anschließend durch eine hauptsächlich durch eine auf die Oberfläche einwirkende Wärmebehandlung das Aluminium auf eine Temperatur über 660°C gebracht werden, so daß die Reaktion stattfindet. Für diese Ausführungsform ist beispielsweise ein Laser geeignet, der entsprechende Temperaturen erzeugen kann. Ebenso ist es möglich, das Aluminium durch thermisches oder Plasmaspraying, CVD oder PVD auf die Oberfläche des Precursors aufzubringen.

Die erfindungsgemäß hergestellten Verbundwerkstoff-Formkörper können auch noch einer Nachbehandlung unterzogen werden. hierbei wird der Körper in einer sauerstoffhaltigen Atmosphäre bei Temperaturen zwischen 800 und 1400°C so lange erhitzt, bis eine Al₂O₃-reichere Deckschicht gebildet ist. Alternativ oder zusätzlich kann man den Formkörper im Vakuum oder in inerter oder reduzierender Atmosphäre bei einer Temperatur zwischen 1000 und 1600°C so lange glühen, bis das gewünschte Gefüge der intermetallischen und gegebenenfalls metallischen Phase erreicht ist oder sich solche Phasen ausgebildet haben, welche die angestrebten Eigenschaften aufweisen.

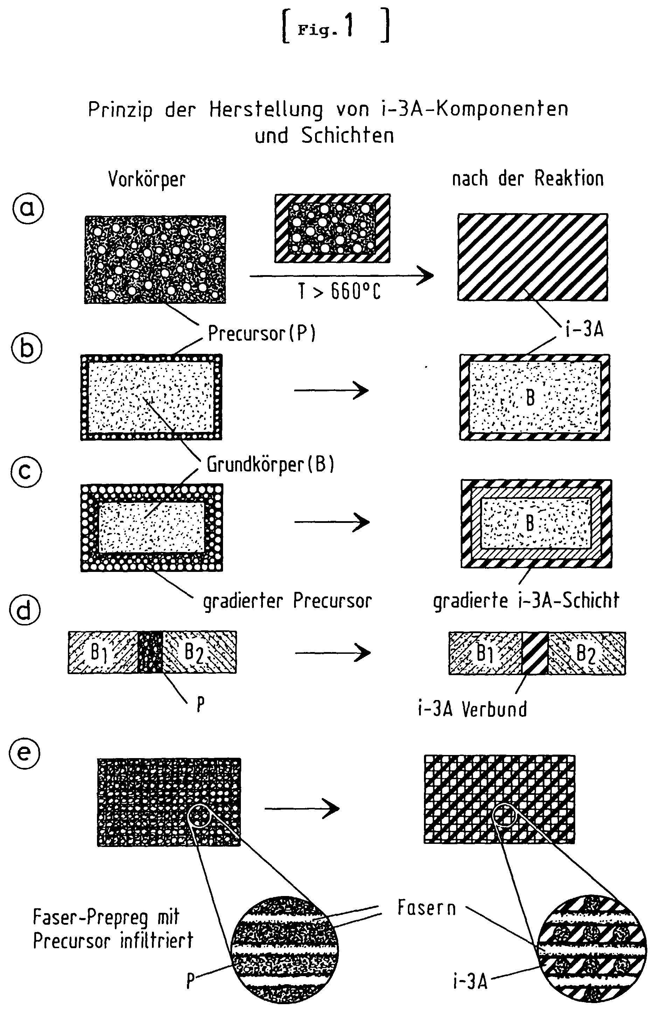

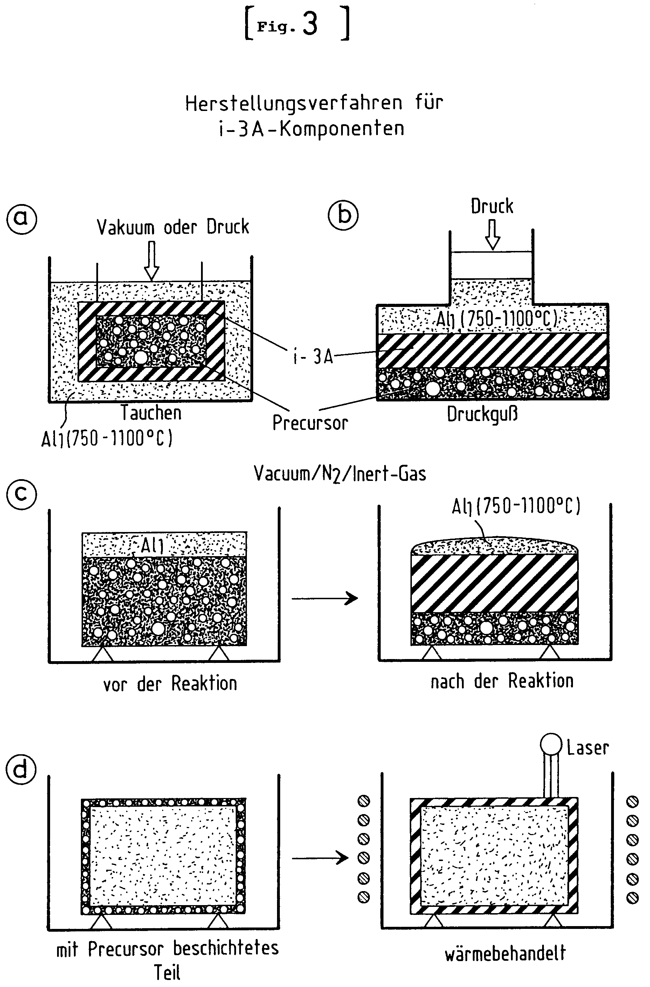

In der einfachsten Ausführungsform des erfindungsgemäßen Verfahrens wird ein Pulverpreßkörper aus einem von Aluminium reduzierbaren Oxid (z.B. $TiO_2$, NiO, $ZrO_2$, $Nb_2O_5$, CaO, $Cr_2O_3$, CuO, $Cu_2O$, CoO, $Co_2O_3$, FeO, $Fe_2O_3$, $Fe_3O_4$, $HfO_2$, $Li_2O$, MnO, MgO, $MoO_3$, $Na_2O$, $Nb_2O$, $Nb_2O_5$, NiO, $SiO_2$, TiO, $TiO_2$, $V_2O_5$, $WO_3$, $Y_2O_3$, $ZrO_2$, Mullite, Spinelle, Zirkonate, Titanate sowie Fe-, Ti-, Co-, Ni-, Zr-, Si-, Nb-haltige Erze, insbesondere Zirkon ($ZrSiO_4$) oder Ilmenit ($FeTiO_3$) bei Temperaturen zwischen 1000 und 1400°C vorgesintert, so daß eine offene Porosität ($P_g$) zwischen 20 und 50 % vorhanden ist. Vorzugsweise sollte zusätzlich Al₂O₃ enthalten sein. Besonders bevorzugt sollte der Al₂O₃-Anteil möglichst so hoch sein (20 - 50 Vol% auf den dichten Körper bezogen), daß die Al₂O₃-Phase ein zusammenhängendes, stützendes Gerüst bildet. In den meisten Fällen ändern sich die äußeren Dimensionen dieses Vorkörpers gegenüber denen des grünen Preßlings kaum, d.h. die gewünschte Porosität des vorgesinterten Vorkörpers läßt sich durch Einstellung des Grünkörpers, d.h. über den Preßdruck kontrollieren. Anschliessend wird der Vorkörper (s.a. Figur 1a) in flüssiges Al eingetaucht (Figur 3a) und entweder unter Vakuum, Normaldruck (N₂, Ar, aber auch Luft) oder Druck (Gasdruck, Ar, N₂ etc. oder mechanischer Druck, wie er beispielsweise einem Spritzgußapparat auftritt, s.a. Figur 3b) mit flüssigem Al infiltriert. Während der Infiltration läuft die Reaktion

$$(x + 2)Al + (3/y)MO \rightarrow Al_2O_3 + M_{3/y}Al_x \qquad (1)$$

entweder vollständig oder teilweise ab.

MO bezeichnet das Metalloxid und $M_xAl_{3/y}$ ist ein entsprechendes Aluminid. Alle in Tabelle 1 nach Gleichung 1 ablaufenden Reaktionen sind mit einer Volumenabnahme verbunden, d.h. das Gesamtvolumen der Startprodukte (linke Seite) ist größer als das der Reaktionsprodukte (rechte Seite). Da jedoch der Vorkörper noch kein Al enthält, dies aber im Schmelzbad ausreichend vorhanden ist, muß das Al in der Volumenbilanz bei der Ausfüllung der Porosität P des Vorkörpers nicht berücksichtigt werden. Dies bedeutet, daß die Reaktion innerhalb des porösen Vorkörpers mit einer Volumenzunahme $\Delta V$ verbunden ist. Die mit der Reaktion verbundenen, nicht auf einen porösen Vorkörper bezogenen Volumenzunahmen $\overline{\Delta V}$ sind in der nachstehenden Tabelle 1 aufgeführt.

## Tabelle 1

| | $\overline{\Delta V}$ |
|---|---|
| $13\ Al\ +\ 3\ TiO_2\ \rightarrow\ 2\ Al_2O_3\ +\ 3\ TiAl_3$ | 190 % |
| $7\ Al\ +\ 3\ TiO_2\ \rightarrow\ 2\ Al_2O_3\ +\ 3\ TiAl$ | 90 % |
| $5\ Al\ +\ 3\ TiO_2\ \rightarrow\ 2\ Al_2O_3\ +\ Ti_3Al$ | 71 % |
| $28\ Al\ +\ 3\ Nb_2O_5\ \rightarrow\ 5\ Al_2O_3\ +\ 6\ NbAl_3$ | 105 % |
| $12\ Al\ +\ 3\ Nb_2O_5\ \rightarrow\ 5\ Al_2O_3\ +\ 2\ Nb_3Al$ | 21 % |
| $13\ Al\ +\ 3\ Nb_2O_5\ \rightarrow\ 5\ Al_2O_3\ +\ 3\ Nb_2Al$ | 26 % |

Daraus ergibt sich für

$$\Delta V = \overline{\Delta V}\ (1\text{-}P), \tag{2}$$

Wobei P aus der Gesamtporosität $P_g$ des Vorkörpers und dem Volumenanteil des Metalloxids $V_{MO}$ der Startmischung ($\overline{V}_{MO} + \overline{V}_{Al2O3} = 1$) berechnet wird.

$$P = \frac{P_g}{(1\text{-}P_g)\,\overline{V}_{MO} + P_g} \tag{3}$$

Bei dieser theoretischen Betrachtung wird angenommen, daß die äußeren Abmessungen des Vorkörpers auch nach der Reaktionsinfiltration erhalten bleiben. Dies wurde experimentell bestätigt. In Verbindung mit der beigefügten Zeichnung wird dies nachstehend näher erläutert.

In der Zeichnung erläutert Figur 1 das Prinzip der Herstellung von erfindungsgemäßen i-3A-Komponenten und -Schichten, Figur 2 das Prinzip der ablaufenden Reaktion in Abhängigkeit von der Beziehung P/$\Delta$V, Figur 3 die verschiedenen erwähnten Herstellungsverfahren für den Vorkörper und die Reaktion mit dem Aluminium und Figur 4 die Wirkung der $Al_2O_3$-Phase bei der Reaktion des Vorkörpers mit dem flüssigen Aluminium.

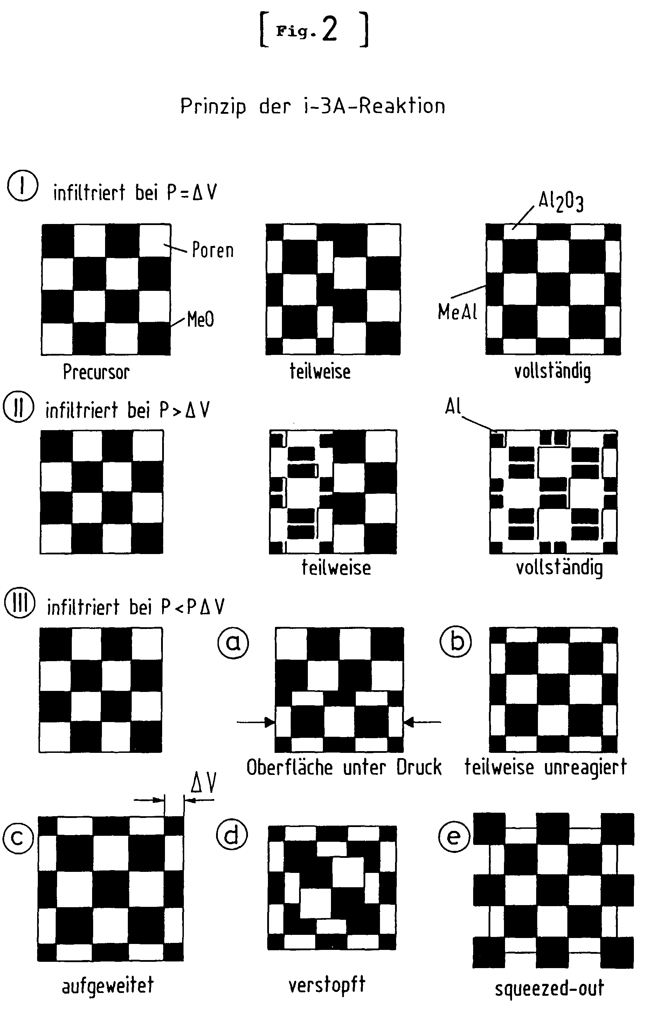

Für den Fall P = $\Delta$V (s.a. Figur 2-I) wird der gesamte Porenraum des Vorkörpers vom Reaktionsprodukt ($Al_2O_3$ + $M_{3/y}Al_x$) ausgefüllt. Wenn P > $\Delta$V ist, wird der nicht vom Reaktionsprodukt gefüllte Raum ($P_{rest}$ = P - $\Delta$V ) von Al oder der Al-Legierung aufgefüllt (dazu s. Figur 2-II). Dies wurde u.a. im System

$$TiO_2 \rightarrow Al_2O_3 + TiAl_3$$

in den reaktionsinfiltrierten i-3A-Proben nachgewiesen. Wenn dagegen der Porenraum klein ist im Vergleich zur Ausdehnung des Reaktionsprodukts (d.h. P < $\Delta$V), kann es unterschiedliche Folgen bei der Reaktionsinfiltration nach sich ziehen (s. Figur 2-III a bis e). Besonders im System

$$ZrO_2 \rightarrow Al_2O_3 + (ZrAl_3,\ ZrAl_2)$$

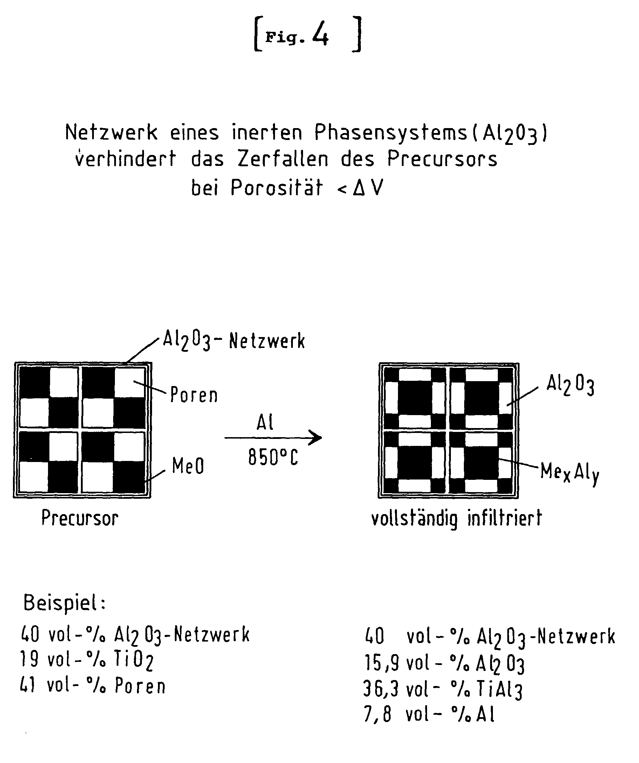

kam es zu Aufweitungen bzw. ZerSetzungen des Reaktionskörpers in der Al-Schmelze (s. Figur 2-III c). Dies liegt aber hauptsächlich daran, daß hierbei wenig oder kein $Al_2O_3$ im Precursor vorhanden war, so daß sich die vorteilhafte Stützwirkung eines $Al_2O_3$-Netzwerks nicht auswirken konnte (s. Figur 4). Bei Zugabe eines höheren $Al_2O_3$-Anteils, womit auch P > $\Delta$V wurde, wurde auch mit $ZrO_2(+Al_2O_3)$ ein dichter $Al_2O_3$-($ZrAl_3$, $ZrAl_2$)-Körper mit geringen Anteilen an Al erhalten, der praktisch dieselben Abmessungen hatte wie der entsprechende Vorkörper.

Durch das erfindungsgemäße Verfahren wird eine Verbesserung folgender Eigenschaften in den meisten Fällen erreicht: Fehlertoleranz, Bruchzähigkeit, Festigkeit, Thermoschockwiderstand, Oxidations- und Korrosionsbeständigkeit, Härte Verschleißfestigkeit und allgemeines Hochtemperaturverhalten Dabei lassen sich je nach Wunsch folgende potentielle Vorteile erzielen:

1. Endkonturnahe Fertigung von Teilen, die danach entweder vollständig oder nur oberflächlich aus i-3A bestehen.

2. i-3A-Versiegelung von Oberflächen von Teilen, d.h. Verbesserung ihrer tribologischen, thermomechanischen und chemischen Fähigkeiten.

3. Möglichkeit der Oberflächenversiegelung nicht nur keramischer Komponenten, sondern auch metallischer (z.B. "rostiger" Stahl) und bei geschickter Prozeßführung auch von Teilen aus entsprechend modifiziertem Zement oder Beton.

4. Schrumpfungsfreie in situ-Erzeugung einer i-3A-Matrix für faserverstärkte Verbundwerkstoffe.

5. Einfache, ungefährliche und umweltfreundliche Aufbereitung (in wäßrigen Medien) der für die Reaktion geeigneten Vorkörper.

6. Anwendbarkeit sämtlicher nasser und trockener pulvermetallurgischer Verfahren zur Vorkörperherstellung in Form von Teilen, Schichten, Verbindungen (Joining) und Matrices.

7. Schichtprecursorherstellung durch Auftragsverfahren wie thermisches oder Plasmaspritzen, CVD oder PVD.

8. Einfache Prozeßführung durch Eintauchen der Vorkörperteile (bzw. der Vorkörper-modifizierten Oberflächen von Komponenten) in flüssiges Al bei Temperaturen zwischen 750 und 1100°C, d.h. bei Temperaturen, bei denen die meisten Fasergelege (Prepregs) stabil sind.

9. Einsatz von Druckgußgeräten (squeeze Caster) und anderen für die Al-Komponentenherstellung verwendeter Guß-Apparaturen und -Maschinen.

10. Gute Benetzung des Vorkörpers durch flüssiges Al bzw. Al-Legierungen infolge der Aluminid-Reaktion.

11. Erzielung porenfreier i-3A Gefüge zumindest im eigenschaftskontrollierenden Oberflächenbereich aufgrund des Auffüllens des Restporenraums mit Al.

Aufgrund dieser Eigenschaften eignen sich die erfindungsgemäß erhaltenen Formkörper insbesondere als verschleißfeste oder/und hochtemperaturfeste Komponenten im Maschinen-, Apparate-, Motoren- und Turbinenbau sowie für Korrosions- und Oxidationsteste. Weiter ist die Verwendung als Funktionselement, insbesondere als Hochleistungsbremselment sowie als elektrisches oder magnetisches Funktionselement möglich.

Die folgenden Beispiele erläutern die Erfindung und die vorstehenden Ausführungen näher.

## Beispiel 1

Um die in Gleichung (2) und (3) ausgeführten Beziehungen anzuwenden, wurde folgendes Beispiel experimentell durchgeführt: 100 g einer Pulvermischung aus 32 Vol.-% $TiO_2$ und 68 Vol.-% $Al_2O_3$ wurde 1 h in $H_2O$ attritiert, danach Rotovap-getrocknet und anschließend isostatisch mit 300 MPa zu zylindrischen Proben mit 10 mm Höhe und 10 mm im Durchmesser verpreßt. Diese Grünproben hatten eine Dichte von ~60 % TD. Diese veränderte sich nach einer 30 min Vorsinterung an Luft bei 1200°C nur unwesentlich (Pg = 41 %)). Daraus folgt für P = 0,68 und $\Delta V$ = 0,62. Danach sollte sich nach der vollständigen Reaktionsinfiltration ein Rest-Al-Anteil von 6 % ($P_{rest}$ = P-$\Delta V$ ) ergeben. Infiltriert wurde in einem $Al_2O_3$-Tiegel mit reinem Al bei 850°C 20 min unter einem Ar-Druck von 12 MPa. Die völlig umgesetzte i-3A-Probe hatte fast dieselben Abmessungen (lineare Aufweitung von 0,2 %) und bestand zu ca. 55 Vol.-% aus $Al_2O_3$, ~35 Vol.-% $TiAl_3$ und ~10 Vol.-% Al. Dieses Ergebnis deckt sich relativ gut mit den theoretischen Vorhersagen. Mit demselben Precursorschlicker wurde in einem weiteren Versuch ein Faservorkörper (Prepreg) aus 10 Lagen eines $Al_2O_3$-Fasergewebes (Nextel 720) infiltriert und danach unter denselben Bedingungen wie zuvor gepreßt und vorgesintert. Der Faserprecursorkörper, der nach dem Vorsintern kleinere Risse aufwies, war nach der Reaktionsinfiltration rißfrei und vollständig dicht. Eine Figuranalyse eines Schliffs zeigte, daß die $Al_2O_3$-Fasern hauptsächlich von $TiAl_3$ umgeben waren und daß das aus der Reaktion entstandene und zugesetzte $Al_2O_3$ nicht auf die Fasern aufgewachsen war.

## Beispiel 2

In einem weiteren Versuch mit dem Schlicker von Beispiel 1 wurde eine zylindrische $Al_2O_3$-Probe, die wie in Beispiel 1 gepreßt und bei 1100°C 20 min vorgesintert wurde (offene Porosität ca. 45 %), mehrfach in den Schlicker getaucht, so daß eine ca. 100 µm dicke Oberflächenschicht entstand. Der so beschichtete poröse Körper wurde danach bei 1300°C 20 min gesintert und anschließend wie in Beispiel 1 reaktionsinfiltriert. Der Zylinder bestand danach aus einem porösen $Al_2O_3$-Inneren in den Abmessungen des vorgesinterten $Al_2O_3$-Körpers mit einer ca. 100 µm dicken Schicht derselben Zusammensetzung wie der zuvor beschriebene i-3A-Massivzylinder. Dieses Beispiel ist schematisch in Figur 3 d wiedergegeben. Auf diese Weise können auch dichte Grundkörper unterschiedlichen Materials mit i-3A-Verbundstoffen versiegelt bzw. beschichtet werden.

**Beispiel 3**

Zylinderproben aus 68 Vol.-% $Al_2O_3$ und 32 Vol.-% $TiO_2$ wurden wie in Beispiel 1 bis 300 MPa gepreßt und danach 1 h an Luft gesintert. Die Dichte betrug danach ~65 % TD. Diese Proben wurden in einem $Al_2O_3$ gestellt und mit einem $Al_2O_3$-Röhrchen gegen Aufschwimmen verklemmt, anschließend mit Al-Pulver (Alcan 105) umschüttet, das zusätzlich 5 Gew.-% Mg-Pulver enthielt. Anschließend wurde der Tiegel unter Vakuum auf 1000°C aufgeheizt und dort 20 min gehalten, so daß die Al-Legierung eindringen und mit dem $TiO_2$ reagieren konnte. Hierbei wurde der Precursor vollständig umgesetzt. Bei einem gleichartigen Versuch mit reinem Al blieb ein Corebereich des Zylinderkörpers unreagiert (siehe Schema in Figur 2 I und II Mitte), was darauf hindeutet, daß die Benetzung etwas schlechter als bei der Mg-haltigen Legierung war und infolgedessen den Oberflächenbereich frühzeitig mit dem Reaktionsprodukt $TiAl_3$+ $Al_2O_3$ "verstopfte".

**Beispiel 4**

100 g einer Pulvermischung aus 50 Vol.-% $Al_2O_3$ (MPa 4, Ceralox Condea, Brunsbüttel) und 50 Vol.-% $TiO_2$ (Riedel de-Haën, Seelze) wurden 4 h in $H_2O$ in einem Attritor mit 3Y-TZP-Mahlkugeln ($3Y_3O_3$-$ZrO_2$, 2 mm Durchmesser) gemahlen. Nach Trocknen in einem Rotovap-Trockner wurden zylindrische Precursor-Proben (5 mm hoch, 10 mm im Durchmesser) isostatisch mit Drücken zwischen 50 und 900 MPa gepreßt. Die Gründichte variierte dabei zwischen 49 % TD (50 MPa) und 62 % TD (900 MPa). Ein Teil der Proben wurde bei 1100°C an Luft 1 h vorgesintert, wobei sich ihre Dimension nicht änderte. Danach wurden die Proben in flüssiges Al (reines Al, 99, 999 %) eingetaucht (dazu siehe Figur 1 a) und bei 900°C einem Ar-Gasdruck von 10 MPa 30 min ausgesetzt. Anschließend wurden die Proben aus dem Al-Bad herausgezogen, an Luft abgekühlt und axial druchtrennt. Die Analyse ergab, daß sich die äußeren Abmessungen um weniger als 0,5 % vergrößert hatten. Proben mit einer Dichte bis ~55 % TD der Precursorgründichte waren vollständig durchreagiert, d.h. es war kein $TiO_2$ mehr festzustellen. Die Proben bestanden zu ca. 70 Vol.-% aus $\alpha$-$Al_2O_3$ und zu 30 Vol.-% aus einem Gemisch aus $TiAl_3$ und $TiAl$ mit ca. 1,5 bis 5 Vol.-% Al. Proben mit > 55 % TD Precursorgründichte enthielten noch Spuren von $TiO_2$, wobei die 62 %-TD-Probe im Zentrum völlig unreagiert war. 10 kg Vickershärteeindrücke in polierte i-3A-Proben zeigten verzweigte Risse, aus denen $K_{Ic}$-Werte von über 6 MPa $\sqrt{m}$ abgeschätzt werden konnten.

**Beispiel 5**

Gleichartige Versuchsserien wie in Beispiel 4 wurden statt mit $TiO_2$ mit (a) NiO (Aldrich, Steinheim), (b) $Fe_2O_3$ (Aldrich, Steinheim), (c) $Nb_2O_5$ (Johnson Matthey, Karlsruhe), (d) m-$ZrO_2$ (Dynazirkon F, Dynamit Nobel AG), (e) $MoO_3$ (Cu-Byproduct, Uni Chile, Santiago), (f) Ilmenit ($TiFeO_3$, CSIR, Neuseeland) und (g) einer Mischung (50:50) aus $ZrO_2$ ud $Nb_2O_5$ durchgeführt. Wie in Beispiel 4 wurde die Al-Reaktion durchgeführt und die Probe analysiert. In allen Fällen ergaben sich fast gleiche Gefüge wie in Beispiel 4, e.h. es bildete sich neben der $Al_2O_3$-Matrix eine durchgehende Aluminidphase, wobei jeweils die Al-reichere Phase des entsprechenden Systems dominant vorhanden war und in allen Fällen noch geringe Mengen an Al (< 5 Vol.-%) festgesetllt werden konnten. Die typischen Gefügeabmessungen ($Al_2O_3$-Korngröße, Aluminid-Ligamentdurchmesser) betrugen zwischen 0,5 und 5 µm.

**Beispiel 6**

Wie in Beispiel 4 wurde eine Precursorprobereihe aus $ZrO_2$ ohne $Al_2O_3$ und eine mit 80 Vol.-% $Al_2O_3$ und 20 Vol.-% $ZrO_2$ hergestellt und wie in Beispiel 4 wärmebehandelt. Während die Probe mit 80 Vol.-% $Al_2O_3$ völlig und ohne wesentliche Änderung der Abmessung in ein i-3A-Gefüge umgewandelt wurde, wurde die reine $ZrO_2$-Probe im flüssigen Al aufgeweitet und zersetzt (siehe dazu Figur 2-III c).

**Beispiel 7**

100 g einer Pulvermischung aus 70 Vol.-% $Al_2O_3$ und 30 Vol.-% $TiO_2$ wurden wie in Beispiel 4 in $H_2O$ attritiert, anschließend wurde der Schlicker in Gipsformen zu Platten 65 x 50 x 10 $mm^3$ gegossen, getrocknet und danach an Luft mit einer Heizrate von 2°C/min auf 1200°C erhitzt und dort 30 min gehalten. Die Dichte betrug danach 69,5 % TD.

Nach einer Druckinfiltration mit reinem Al bei 850°C, 20 min mit 12 MPa Ar-Druck waren die Proben durchreagiert, d.h. sie bestanden hauptsächlich aus $Al_2O_3$ (Korngröße 0,3 - 2 $\mu$m) mit einer zusammenhängenden Metallphase aus $TiAl_3$ sowie geringen Mengen (< 5 Vol.-%) an XRD-nachweisbarem Al.

**Beispiel 8**

Die wie in Beispiel 7 vorgesinterten Proben wurden in einem $Al_2O_3$-Tiegel unter $N_2$ drucklos (d.h. 0,1 MPa $N_2$) bei 1100°C mit einer 2,5 % Mg-haltigen Al-Legierung infiltriert. Nach 30 min waren die Proben vollständig durchreagiert, wobei sich das Gefüge nicht von den Proben aus Beispiel 7 unterschied.

**Beispiel 9**

Uniaxial bei 50 MPa gepreßte Grünkörper (Zylinder 4 mm hoch, 20 mm Durchmesser) aus $Nb_2O_5$-Pulver (wie Figur 2 c) ohne $Al_2O_3$ mit einer Dichte von 52 % TD wurden ungesintern in einem $Al_2O_3$-Tiegel mit ebenfalls 20 mm Innendurchmesser gelegt. Danach wurden die Proben wie in Beispiel 4 mit der 2,5 % Mg-haltigen Al-Legierung, die zuvor in festen Stücken über den grünen Precursor gelegt wurden, bei 900°C 30 min reaktionsinfiltriert. Nach der Abkühlung wurde der Tiegel axial halbiert und das Produkt analysiert. Die ursprüngliche Preßform (d.h. der Grünprecursor) war vollständig ohne meßbare Volumenänderung in $Al_2O_3$ und $NbAl_3$ mit Spuren von Al umgewandelt. In einem ähnlichen Versuch wurde statt des Preßkörpers $Nb_2O_5$-Pulver in den Tiegel geschüttet und mit 2 MPa leicht angepreßt (Dichte 38 % TD) und wie zuvor infiltriert und analysiert. Das Reaktionsprodukt hatte sich axial (radial durch den Tiegel behindert) geringfügig aufgeweitet. Es bestand zu ca. 55 Vol.-% aus $NbAl_3$ und Al und 45 Vol.-% $Al_2O_3$ mit typischen Phasenabmessungen von 1 - 15 $\mu$m.

**Patentansprüche**

1.  Verfahren zur Herstellung eines metall-keramischen Verbundwerkstoff-Formkörpers, enthaltend eine $Al_2O_3$-reiche Phase, die von einer überwiegend aus Aluminiden bestehenden metallischen Phase durchzogen ist,
    **dadurch gekennzeichnet,**
    daß man einen, gegebenenfalls gesinterten, Vorkörper aus mindestens einer von Aluminium reduzierbaren oxidischen Verbindung, und gegebenenfalls weiteren nicht oxidischen Verbindungen oder Elementen, mit flüssigem Aluminium oder Aluminiumlegierung umsetzt, bis mindestens in der Oberschicht die Bildung von Aluminid und $Al_2O_3$ stattgefunden hat.

2.  Verfahren nach Anspruch 1, **dadurch gekennzeichnet,**
    daß man als Vorkörper einen ungesinterten Grünkörper oder einen aus letzterem durch Sintern hergestellten Precursor verwendet.

3.  Verfahren nach Anspruch 1 oder 2, **dadurch gekennzeichnet,**
    daß man einen oxidhaltigen Vorkörper verwendet, der als Formkörper, Schicht, Zwischenschicht oder Matrix eines Verbundwerkstoffes vorliegt.

4.  Verfahren nach einem der vorhergehenden Ansprüche, **dadurch gekennzeichnet,**
    daß man einen Vorkörper verwendet, der 20 bis 50 Vol.-% $Al_2O_3$, bezogen auf den dichten Körper, enthält.

5.  Verfahren nach Anspruch 4, **dadurch gekennzeichnet,**
    daß der Vorkörper $Al_2O_3$ in solcher Menge enthält, daß die $Al_2O_3$-Phase ein zusammenhängendes stützendes Gerüst bildet.

6.  Verfahren nach einem der vorhergehenden Ansprüche, **dadurch gekennzeichnet,**
    daß man die Korngröße des Vorkörpers und die Umsetzungsbedingungen mit dem flüssigen Aluminium so wählt, daß man eine $Al_2O_3$-Korngröße zwischen 0,1 und 10 $\mu$m im Mittel erhält.

7.  Verfahren nach einem der vorhergehenden Ansprüche, **dadurch gekennzeichnet,**
    daß man einen Vorkörper verwendet, der als von Aluminium reduzierbare oxidische Verbindung mindestens eine Verbindung aus der Gruppe CaO, $Cr_2O_3$, CuO, $Cu_2O$, CoO, $Co_2O_3$, FeO, $Fe_2O_3$, $Fe_3O_4$, $HfO_2$, $Li_2O$, MnO, MgO, $MoO_3$, $Na_2O$, $Nb_2O$, $Nb_2O_5$, NiO, $SiO_2$, TiO, $TiO_2$, $V_2O_5$, $WO_3$, $Y_2O_3$, $ZrO_2$, Mullite, Spinelle, Zirkonate, Titanate sowie Fe-, Ti-, Co-, Ni-, Zr, Si-, Nb-haltige Erze, insbesondere Zirkon ($ZrSiO_4$) oder Ilmenit ($FeTiO_3$) enthält.

8.  Verfahren nach einem der vorhergehenden Ansprüche, **dadurch gekennzeichnet,**

daß der Vorkörper durch Pressen, Spritzen oder Schlickergießen aus den feingemahlenen Bestandteilen hergestellt wird.

9. Verfahren nach Anspruch 8, **dadurch gekennzeichnet,**
daß man zur Herstellung des Formkörpers Pulver mit einer mittleren Teilchengröße zwischen 0,1 und 100 μm, insbesondere zwischen 0,3 und 10 μm einsetzt.

10. Verfahren nach einem der vorhergehenden Ansprüche, **dadurch gekennzeichnet,**
daß dem zur Herstellung des Formkörpers verwendeten Pulvergemisch keramische oder/und metallische Phasen Zugesetzt werden.

11. Verfahren nach einem der vorhergehenden Ansprüche, **dadurch gekennzeichnet,**
daß der Pulvermischung zur Herstellung des Vorkörpers Verstärkungs- oder/und Funktionselemente zugesetzt werden.

12. Pulvermischung nach Anspruch 11, **dadurch gekennzeichnet,**
daß man Partikel, Kugeln, Plättchen, Whisker oder/und Fasern zusetzt.

13. Verfahren nach Anspruch 11 oder 12, **dadurch gekennzeichnet,**
daß der Volumenanteil der Verstärkungszusätze zwischen 5 und 50 % liegt.

14. Verfahren nach Anspruch 11, 12 oder 13, **dadurch gekennzeichnet,**
daß Verstärkungs- und Funktionelemente mit einem Durchmesser zwischen 0,5 und 1000 μm verwendet werden.

15. Verfahren nach einem der Ansprüche 11 bis 14, **dadurch gekennzeichnet,**
daß die zugesetzten Verstärkungs- oder Funktionselemente aus Oxiden, Carbiden, Nitriden, Boriden oder/und Siliciden bestehen.

16. Verfahren nach Anspruch 15, **dadurch gekennzeichnet,**
daß die Verstärkungs- oder Funktionselemente aus Kohlenstoff, Diamant, SiC, $Al_2O_3$, $Si_3N_4$, TiC, WC oder/und $ZrO_2$ bestehen.

17. Verfahren nach einem der Ansprüche 11 bis 14, **dadurch gekennzeichnet,**
daß die Verstärkungs- oder Funktionselemente aus Platelets oder kontinuierlichen oder diskontinuierlichen Fasern mit Durchmessern zwischen 5 und 150 μm bestehen.

18. Verfahren nach Anspruch 17, **dadurch gekennzeichnet,**
daß ein aus kontinuierlichen Fasern bestehendes Fasergelege verwendet wird.

19. Verfahren nach einem der Ansprüche 17 und 18, **dadurch gekennzeichnet,**
daß die Verstärkungselemente aus beschichteten oder unbeschichteten SiC, SiCB, SiCBN, $Si_3N_4$ oder/und Mullit-Fasern bestehen.

20. Verfahren nach einem der vorhergenden Ansprüche, **dadurch gekennzeichnet,**
daß der Vorkörper nach einem P/M-Verfahren hergestellt wird.

21. Verfahren nach einem der vorhergehenden Ansprüche, **dadurch gekennzeichnet,**
daß ein Vorkörper mit einer offenen Porosität zwischen 5 und 60 % verwendet wird.

22. Verfahren nach Anspruch 21, **dadurch gekennzeichnet,**
daß die offene Porosität 10 bis 40 % beträgt.

23. Verfahren nach einem der vorhergehenden Ansprüche, **dadurch gekennzeichnet,**
daß der Vorkörper schichtförmig auf einem Grundkörper aufgebaut vorliegt.

24. Verfahren nach Anspruch 23, **dadurch gekennzeichnet,**
daß das Vorläuferpulver auf einen Grundkörper aus anorganischem Material in Schichtdicken zwischen 10 μm und 1 cm aufgetragen wird.

25. Verfahren nach einem der vorhergehenden Ansprüche, **dadurch gekennzeichnet,**
daß der Grünkörper in sauerstoffhaltiger Atmosphäre bei Temperaturen zwischen 1000 und 1400°C gesintert wird.

26. Verfahren nach einem der Ansprüche 1 bis 20, **dadurch gekennzeichnet,**
daß man einen dichtgesinterten Vorkörper verwendet.

27. Verfahren nach Anspruch 26, **dadurch gekennzeichnet,**
daß man das Dichtsintern bei Temperaturen über 1400 bis 1700°C durchführt.

28. Verfahren nach einem der vorhergehenden Ansprüche, **dadurch gekennzeichnet,**
daß man den Vorkörper mit flüssigem Aluminium oder Aluminiumlegierung bei einer Temperatur zwischen 660 und 1300°C behandelt.

29. Verfahren nach Anspruch 28, **dadurch gekennzeichnet,**
daß man die Behandlung bei einer Temperatur zwischen 750 und 1100°C durchführt.

30. Verfahren nach einem der vorhergehenden Ansprüche, **dadurch gekennzeichnet,**
daß man den Vorkörper mit dem flüssigen Al oder der flüssigen Al-Legierung so lange in Berührung bringt bis zumindest der Oberflächenbereich teilweise in $Al_2O_3$ und Aluminide umgewandelt ist.

31. Verfahren nach einem der vorhergehenden Ansprüche, **dadurch gekennzeichnet,**
daß der Vorkörper in flüssiges Aluminium oder Aluminiumlegierung eingetaucht wird.

32. Verfahren nach einem der Ansprüche 1 bis 30, **dadurch gekennzeichnet,**
daß flüssiges oder verflüssigtes Aluminium oder Aluminiumlegierung auf die Oberflächen des Vorkörpers aufgebracht wird.

33. Verfahren nach einem der vorhergehenden Ansprüche, **dadurch gekennzeichnet,**
daß der Vorkörper mit dem flüssigen Aluminium bzw. der Aluminiumlegierung im Vakuum, unter Normaldruck an Luft oder in inerter Atmosphäre oder in reduzierender Atmosphäre oder unter Überdruck behandelt wird.

34. Verfahren nach einem der Ansprüche 1 bis 30 und 33, **dadurch gekennzeichnet,**
daß man das Aluminium oder die Aluminiumlegierung als Pulversuspension auf die Vorkörperoberfläche aufbringt und durch eine auf die Oberfläche wirkende Wärmebehandlung verflüssigt.

35. Verfahren nach einem der vorhergehenden Ansprüche, **dadurch gekennzeichnet,**
daß der hergestellte Verbundwerkstoff-Formkörper einer Nachbehandlung durch Erhitzen in einer sauerstoffhaltigen Atmosphäre zwischen 800 und 1400°C bis zur Ausbildung einer $Al_2O_3$-reicheren Deckschicht unterzogen wird.

36. Verfahren nach einem der vorhergehenden Ansprüche, **dadurch gekennzeichnet,**
daß man den Verbundwerkstoff-Formkörper im Vakuum, in inerter oder reduzierender Atmosphäre bei einer Temperatur zwischen 1300 und 1600°C zur Gefügeverbesserung glüht.

37. Verwendung eines nach einem der Ansprüche 1 bis 36 hergestellten Verbundwerkstoff-Formkörpers als verschleißfeste oder/und hochtemperaturfeste Komponente im Maschinen-, Apparate-, Motoren- und Turbinenbau.

38. Verwendung eines nach einem der Ansprüche 1 bis 36 hergestellten Verbundwerkstoff-Formkörpers für den Einsatz unter Korrosions- oder/und Oxidationsbedingungen.

39. Verwendung eines nach einem der Ansprüche 1 bis 36 hergestellten Verbundwerkstoff-Formkörpers als Funktionselement, insbesondere als Hochleistungsbremselement.

40. Verwendung eines nach einem der Ansprüche 1 bis 36 hergestellten Verbundwerkstoff-Formkörpers als elektrisches oder magnetisches Funktionselement.

[ Fig. 1 ]

Prinzip der Herstellung von i-3A-Komponenten
und Schichten

Vorkörper                                    nach der Reaktion

ⓐ

$T > 660°C$

Precursor (P)                                i-3A

ⓑ

B                B

Grundkörper (B)

ⓒ

B                B

gradierter Precursor          gradierte i-3A-Schicht

ⓓ

B1        B2                  B1        B2

P                             i-3A Verbund

ⓔ

Fasern

Faser-Prepreg mit
Precursor infiltriert

P                             i-3A

[ **Fig.** 2 ]

Prinzip der i-3A-Reaktion

(I) infiltriert bei P = $\Delta$V

Precursor       teilweise       vollständig

Poren

MeO

Al$_2$O$_3$

MeAl

(II) infiltriert bei P > $\Delta$V

teilweise       vollständig

Al

(III) infiltriert bei P < P$\Delta$V

(a) Oberfläche unter Druck       (b) teilweise unreagiert

$\Delta$V

(c) aufgeweitet       (d) verstopft       (e) squeezed-out

[ Fig. 3 ]

Herstellungsverfahren für
i-3A-Komponenten

(a) Vakuum oder Druck

i- 3A

Tauchen

Al₁(750-1100°C)

Precursor

(b) Druck

Al₁ (750-1100°C)

Druckguß

Vacuum/N₂/Inert-Gas

(c)

Al₁

Al₁(750-1100°C)

vor der Reaktion

nach der Reaktion

(d)

Laser

mit Precursor beschichtetes
Teil

wärmebehandelt

$$\left[\, \text{Fig. } 4 \,\right]$$

Netzwerk eines inerten Phasensystems $(Al_2O_3)$
verhindert das Zerfallen des Precursors
bei Porosität $< \Delta V$

Precursor → $\xrightarrow[850°C]{Al}$ → vollständig infiltriert

Beispiel:

40 vol-% $Al_2O_3$-Netzwerk
19 vol-% $TiO_2$
41 vol-% Poren

40 vol-% $Al_2O_3$-Netzwerk
15,9 vol-% $Al_2O_3$
36,3 vol-% $TiAl_3$
7,8 vol-% $Al$

Europäisches
Patentamt

**EUROPÄISCHER RECHERCHENBERICHT**

Nummer der Anmeldung

EP 97 10 2335

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | CHEMICAL ABSTRACTS, vol. 114, no. 6, 11.Februar 1991 Columbus, Ohio, US; abstract no. 47607, FUKUNAGA ET AL.: "Preparation of intermetallic compound matrix composites by reaction squeeze casting" XP002031628 * Zusammenfassung * & JOURNAL OF MATERIALS SCIENCE LETTERS, Bd. 9, - 31.Dezember 1990 Seiten 23-25, H. FUKUNAGA ET AL.: "Preparation of intermetallic compound matrix composites by reaction squeeze casting" --- | 1-3,7,8, 20,30, 32,33 | C04B35/80 C22C1/05 C04B35/65 C04B35/653 |
| X | CHEMICAL ABSTRACTS, vol. 121, no. 22, 28.November 1994 Columbus, Ohio, US; abstract no. 261403, H. FUKUNAGA: "Composite materials and their preparation" XP002031629 * Zusammenfassung * & DATABASE WPI Week 9432 Derwent Publications Ltd., London, GB; AN 94-260877 & JP 06 192 767 (SHINGIJUTSU JIGYODAN) , 12.Juli 1994 * Zusammenfassung * --- | 1-5,7,8, 10-13, 15, 18-20, 30,32-34 | |

| RECHERCHIERTE SACHGEBIETE (Int.Cl.6) |
|---|
| C04B C22C |

-/--

Der vorliegende Recherchenbericht wurde für alle Patentansprüche erstellt

| Recherchenort | Abschlußdatum der Recherche | Prüfer |
|---|---|---|
| DEN HAAG | 27.Mai 1997 | Harbron, J |

EPO FORM 1503 03.82 (P04C03)

Europäisches
Patentamt

**EUROPÄISCHER RECHERCHENBERICHT**

Nummer der Anmeldung

EP 97 10 2335

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,P | CHEMICAL ABSTRACTS, vol. 125, no. 14, 30.September 1996 Columbus, Ohio, US; abstract no. 174928, T.KURAMOTO ET AL.: XP002031630 * Zusammenfassung * & PATENT ABSTRACTS OF JAPAN vol. 96, no. 010, 31.Oktober 1996 & JP 08 143990 A (MICRO TECHNO KK), 4.Juni 1996, * Zusammenfassung * --- | 1-4,7,8, 10-13, 15,16, 20,30, 32-34,37 | |
| A,P | US 5 503 874 A (J.F.ACKERMAN ET AL.) 2.April 1996 * Spalte 3, Zeile 21 - Spalte 6, Zeile 17 * --- | 1,23,24, 37,38 | |
| A | US 4 847 044 A (A.K.GHOSH) 11.Juli 1989 * Ansprüche; Beispiele * ----- | 1,11-19 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 27.Mai 1997 | Harbron, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)